# EUROPEAN PATENT APPLICATION

(11) **EP 4 506 120 A1**
(43) Date of publication of application: **12.02.2025**
(21) Application number: 24792175.2
(22) Date of filing: 22.05.2024
(51) Int. Cl.: B26D 1/08, B32B 27/32, B32B 27/36, B32B 27/06, B32B 33/00, B26D 7/06, B26D 7/01, H01M 10/0525

(54) **INTERMITTENT COMPOSITE STRIP AND PREPARATION METHOD, AND TRANSFER STRIP AND PREPARATION DEVICE AND METHOD**

(30) Priority: 08.09.2023 CN 202311156847
(71) Applicant: Chongqing Tianqi Lithium Co., Ltd., Chongqing 402560 (CN); Tianqi Lithium Genesis Technology (Shenzhen) Ltd., Shenzhen, Guangdong 518000 (CN)
(72) Inventor: WAN, Yuanjie, Chongqing 402560 (CN); WU, Yongpeng, Chongqing 402560 (CN); WANG, Guang, Chongqing 402560 (CN); LIU, Qiang, Chongqing 402560 (CN); WU, Jiao, Chongqing 402560 (CN); AI, Wangsheng, Chongqing 402560 (CN)
(74) Representative: MacLachlan & Donaldson
(86) International application number: PCT/CN2024/094679
(87) International publication number: WO 2024/217592

(57) **Abstract**

The present invention relates to the field of preparation of a composite strip, and discloses an intermittent composite strip, a preparation method therefor, a transfer strip, a preparation device and a preparation method therefor. The preparation method for the intermittent composite strip includes the following steps: acquiring the transfer strip, where the transfer strip includes a load strip and a first composite material strip, and the first composite strip is intermittently arranged on the load strip; acquiring a second composite material strip, where a bonding force between the second composite material strip and the first composite material strip is greater than that between the first composite material strip and the load strip under a same pressure; and performing pressure bonding on a side of the transfer strip including the first composite material strip with the second composite material strip to obtain the intermittent composite strip. Through the method, the second composite material strip can be subjected to composite pressure only once and can be protected from being damaged to the greatest extent, thus improving the quality of the intermittent composite strip and increasing the yield thereof.

## Description

### Cross-reference to Related Applications

This application claims the benefits and priority of Chinese Patent Application CN 2023111568474 filed on September 08, 2023, which is hereby incorporated by reference in its entirety for all other purposes.

### Technical Field

The present invention relates to the preparation field of a composite strip, and in particular, to an intermittent composite strip, a preparation method therefor, a transfer strip, a preparation device and a preparation method therefor.

### Background

Theoretically, as lithium has the highest energy density (3860mAh/g) and low electrode potential (-3.04V Vs standard hydrogen electrode), it has great potential to be used as a negative electrode material for the next generation of high-energy batteries or solid-state batteries. When the lithium is used as the negative electrode material of the solid-state batteries, it is generally prepared into a lithium strip with a thickness of 5-50 um, and the lithium strip is bonded to copper foil. As a negative electrode material, the lithium participates in electrochemical reaction, and the function of the copper foil is similar to that of a current collector of a liquid lithium ion battery and it is used as the current collector to transfer electrons.

With the development of lithium battery technologies, a large battery route has gradually become a trend. How to prepare large-size lithium-copper composite electrode slices? At present, a common process is to reserve a blank copper foil in the width direction of a lithium-copper composite strip, cut it into slices and weld a tab to the reserved blank copper foil. Preparing a large battery by the process has the high requirement for the width of the lithium strip, and the width needs to reach 300 mm or more according to the size of the battery.

However, it is very difficult to manufacture a wide lithium strip now. One of the solutions is that, an intermittently bonded lithium-copper composite strip can be prepared by completely overlapping the lithium strip and the copper foil in a width direction and reserving a specified gap in a length direction when the lithium strip is bonded to the copper foil. In follow-up preparation, the strip is cut laterally at an intermittent position and a tab is welded at the gap in the length direction. Thus, large-size negative electrode slices can be prepared to meet the use requirements of large batteries.

Patent publication No. CN114597331A discloses a preparation method for an intermittent lithium strip. A part of a lithium layer on a lithium foil PL is scraped off by controlling the intermittent up-and-down movement of a scraper to form an intermittent lithium foil PNL. The method has some inherent limitations and features in scraping off the lithium through contact between the scraper and the lithium foil PL. If the scraper is in strong contact with the lithium foil PL, it is very likely that the load layer will be damaged, scratched or even broken. Especially in the case where a copper foil loaded lithium strip is scraped, a thin copper foil itself is very fragile, and the damage to the copper foil current collector is likely to cause the safety problem of the battery. If the scraper is in slight contact with the lithium foil PL, the lithium cannot be completely scraped off. The residual lithium at the intermittent position will also cause great problems for the later manufacturing of batteries.

Patent publication No. CN216928627U discloses a preparation method for an intermittent lithium strip. The preparation method features in intermittently coating a release agent on the copper foil, and then rolling the lithium foil strip and the copper foil. At the place where the release agent is present after rolling, the lithium foil will not be transferred to the copper foil due to the release agent. However, at the place where the release agent is absent after rolling, the lithium foil will be transferred to the copper foil, thus forming an intermittent lithium-copper composite strip. One of the problems of the method is that the lithium foil at the edge of the intermittent position is separated by tearing, the reliability of separation through tearing is not high, its edge cannot be neat and consistent and even be developed into a large area of defects, which will also have a great impact on the follow-up preparation of electrode slices of the batteries.

### Summary

The technical problem to be solved by the present invention is to provide an intermittent composite strip, a preparation method therefor, a transfer strip, a preparation device and a preparation method therefor, thereby effectively improving the quality of the intermittent composite strip.

A preparation method for an intermittent composite strip disclosed in the present invention includes the following steps:
acquiring a transfer strip, where the transfer strip includes a load strip and a first composite material strip, and the first composite material strip is intermittently arranged on the load strip;
acquiring a second composite material strip, where a binding force between the second composite material strip and the first composite material strip is greater than that between the first composite material strip and the load strip under a same pressure; and
performing pressure bonding on a side of the transfer strip including the first composite material strip with the second composite material strip to obtain the intermittent composite strip.

Preferably, the load strip is a PE film, a PP film or a PET film.

This application provides an intermittent composite strip that is prepared by using the preparation method for an intermittent composite strip.

This application provides a transfer strip used in the preparation method for an intermittent composite strip, and the transfer strip includes a load strip and a first composite material strip, where the first composite material strip is intermittently arranged on the load strip.

This application provides a preparation device for a transfer strip, and the device includes a press roll, a slitter and a slitting roll, where a bonding station and a slitting station are sequentially arranged corresponding to the slitting roll, and the press roll is arranged on the bonding station in combination with the slitting roll;
the slitting roll includes a roll body and a guide mechanism, where the guide mechanism includes a guide element and a first control element; the guide element has a first position and a second position and is switched between the first position and the second position through the first control element; the first position of the guide element is located on the circumferential surface of the roll body; and the second position of the guide element is separated from the circumferential surface of the roll body; and
the slitter is arranged on the slitting station.

Preferably, the guide mechanism includes a second control element for controlling the guide element to be switched to a third position, a guide groove is formed in the circumferential surface of the slitting roll, and the third position is located in the guide groove.

Preferably, the guide element is rod-shaped.

Preferably, the guide mechanism includes a guide bracket arranged in the guide groove, a side of the guide element is hinged with the guide bracket, the first control element is a first linear driving element, both ends of the first linear driving element are respectively hinged with the guide element and the guide bracket to drive the guide element to rotate, whereby implementing switching between the first position and the second position.

Preferably, the second control element is a second linear driving element, and both ends of the second linear driving element are respectively connected to the guide bracket and the guide groove to drive the guide element, whereby implementing switching to the third position.

Preferably, the circumferential surface of the slitting roll is uniformly provided with at least two guide grooves, and the guide mechanism is respectively arranged in each of the guide grooves.

Preferably, the slitting roll is driven to rotate through a stepping motor or a servo motor, and an angle of each rotation is equal to 360 degrees divided by the number of guide grooves.

Preferably, the slitter is a laser slitter or a mechanical slitter.

Preferably, the preparation device for a transfer strip further includes a conveying line of a first composite material strip, a conveying line of a load strip and a winder line of the transfer strip; an unwinder line of the first composite material strip and an unwinder line of the load strip are converged on a bonding station of a press roll and a slitting roll, and a winder line of the transfer strip is arranged behind the slitting roll;
the unwinder line of the first composite material strip includes an unwinder of the first composite material strip;
the conveying line of a load strip includes an unwinding roll of the load strip and a first floating roll that are sequentially arranged; and
the winder line of the transfer strip includes a second floating roll and a winding roll that are sequentially arranged.

This application provides a preparation method for a transfer strip by the preparation device for a transfer strip, and the method includes the following steps:
in a case that a guide element is located at a second position, conveying a load strip to the circumferential surface of a slitting roll;
controlling the guide element to be switched into a first position by using a first control element, so that the guide element is located on the load strip;
rotating the slitting roll to a bonding station, and bonding a first composite material strip to a load strip through rolling of the press roll and the slitting roll;
continuing to rotate the slitting roll to a slitting station, and cutting the first composite material strip on the load strip into an intermittent structure by using the guide element corresponding to a slitter to obtain an intermittent transfer strip; and
after cutting, controlling the guide element to be switched to the second position by using the first control element.

Preferably, the guide mechanism includes a second control element for controlling the guide element to be switched to a third position, a guide groove is formed in the circumferential surface of the slitting roll, and the third position is located in the guide groove;
before the slitting roll is rotated to the bonding station, the guide element is controlled to move to a third position by using a second control element, whereby driving the corresponding load strip to enter the guide groove; and
after cutting, the guide element is controlled to move to the first position by using the second control element, and then the guide element is controlled to be switched to the second position by using the first control element.

The beneficial effects of the present invention are that: according to the preparation method for an intermittent composite strip, the first composite material strip and the second composite material strip intermittently arranged on the load strip are bonded; in such an indirect way, the second composite material strip can be subjected to composite pressure only once and can be protected from being damaged to the greatest extent, and the composite material strip is not prone to wrinkling, thus improving the quality of the intermittent composite strip and increasing the yield thereof. The preparation method can be used not only for common intermittent composite lithium-copper strips, but also for bonding of lithium or lithium alloy with other metals.

### Brief Description of Drawings

FIG. 1 is a schematic diagram of a transfer strip;
FIG. 2 is a schematic diagram of a guide mechanism;
FIG. 3 is a schematic diagram of a core component of a preparation device for a transfer strip;
FIG. 4 is an overall schematic diagram of a preparation device for a transfer strip;

Reference symbols: unwinding roll of load strip 1, first floating roll 2, unwinding roll of first composite material strip 3, press roll 4, slitter 5, slitting roll 6, guide mechanism 60, guide element 61, guide bracket 62, second linear driving element 63, second linear driving element 64, guide groove 65, second floating roll 7, winding roll 8, transfer strip 9, and load strip 91.

### Detailed Description

The following will further describe the present invention.

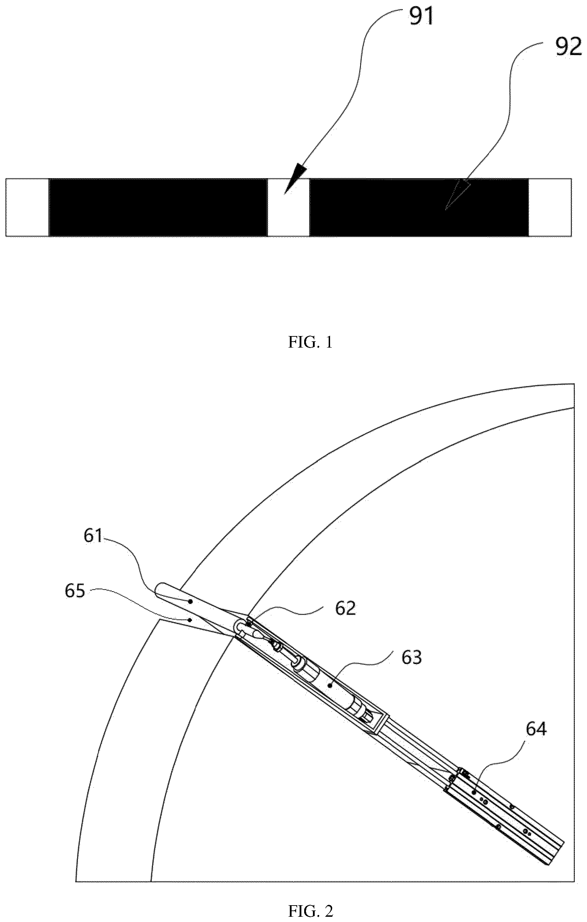

A preparation method for an intermittent composite strip disclosed in the present invention includes the following steps:
acquiring a transfer strip, as shown in FIG. 1, where the transfer strip 9 includes a load strip 91 and a first composite material strip 92, and the first composite material strip 92 is intermittently arranged on the load strip 91;
acquiring a second composite material strip, where a binding force between the second composite material strip and the first composite material strip 92 is greater than that between the first composite material strip 92 and the load strip 91 under a same pressure; and
performing pressure compounding on a side of the transfer strip 9 including the first composite material strip 92 with the second composite material strip to obtain the intermittent composite strip.

The preparation target of the embodiment is that the first composite material strip 92 is intermittently distributed on the intermittent composite material strip of the second composite material strip, and the transfer strip 9 formed by intermittently arranging the first composite material strip 92 on the load strip 91 is obtained instead of being directly prepared. Pressure bonding is performed on side of the transfer strip 9 including the first composite material strip 92 and the second composite material strip to prepare the intermittent composite strip. After preparation, the load strip 91 of the transfer strip 9 is not necessarily removed, but can be kept during storage and transportation, which can play the role of protection. When the intermittent composite strip is used, the load strip 91 is removed. Because a binding force between the second composite material strip and the first composite material strip 92 is greater than that between the first composite material strip 92 and the load strip 91 under a same pressure, it can be ensured that the first composite material strip 92 and the second composite material strip will not be separated when the load strip 91 is removed.

The corresponding materials of the first composite material strip 92 and the second composite material strip are selected according to the actual production needs. For the production of negative plates of batteries, the first composite material strip 92 is usually a lithium strip or a lithium alloy strip prepared from lithium and one or more of magnesium, zinc, tin and indium, while the second composite material strip is usually selected from copper foil, and may be silver foil in some special applications. Theoretically, the load strip 91 is available, provided that the bonding force between the load strip 91 and the first composite material strip 9 is smaller than that between the second composite material strip and the first composite material strip 92 under the same pressure. However, in consideration of material characteristics, price and the aforementioned protection effect, plastic films such as PE film, PP film or PET film are preferably adopted.

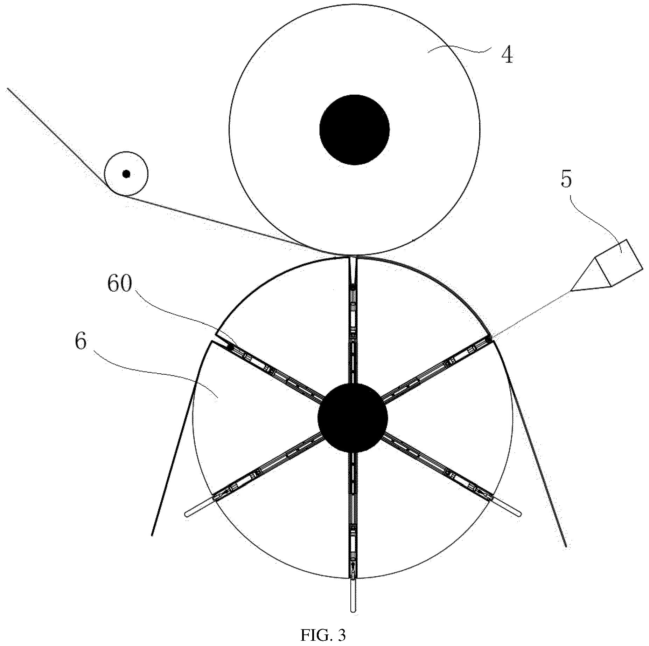

It can be seen that the actual operation of transferring the first composite material strip 92 from the transfer strip 9 to the second composite material strip is relatively simple, while a difficulty actually lies in the preparation of the transfer strip 9. Actually, the transfer strip 9 can be prepared with reference to the existing preparation device and method for an intermittent lithium strip. However, herein, this application provides a better preparation device for the transfer strip 9; as shown in FIG. 2 and FIG. 3, the device specifically includes a press roll 4, a slitter 5 and a slitting roll 6; a bonding station and a slitting station are sequentially arranged corresponding to the slitting roll 6; the press roll 4 is arranged on the bonding station in combination with the slitting roll 6;
the slitting roll 6 includes a roll body and a guide mechanism 60, where the guide mechanism 60 includes a guide element 61 and a first control element; the guide element 61 has a first position and a second position and is switched between the first position and the second position through the first control element; the first position of the guide element 61 is located on the circumferential surface of the roll body; and the second position of the guide element 61 is separated from the circumferential surface of the roll body; and
the slitter 5 is arranged on the slitting station.

A preparation method for the transfer strip 9 for the device is used and includes the following steps:
in a case that a guide element 61 is located at a second position, conveying a load strip 91 to the circumferential surface of a slitting roll 6;
controlling the guide element 61 to be switched into a first position by using a first control element, so that the guide element 61 is located on the load strip 91;
rotating the slitting roll 6 to a bonding station, and bonding a first composite material strip 92 to a load strip 91 through rolling of the press roll 4 and the slitting roll 6;
continuing to rotate the slitting roll 6 to a slitting station, and cutting the first composite material strip 92 on the load strip 91 into an intermittent structure by using the guide element 61 corresponding to a slitter 5 to obtain an intermittent transfer strip 9; and
after cutting, controlling the guide element 61 to be switched to the second position by using the first control element.

When located at the second position, the guide element 61 is separated from the circumferential surface of the slitting roll 6, so that the load strip 91 can be conveyed to the circumferential surface of the slitting roll 6, and the guide element 61 can be pressed against the load strip 91 after switched to the first position. Therefore, when the first composite material strip 92 is bonded to the load strip 91, the first composite material strip 92 at the position of the guide element 61 will not be bonded to the load strip 91 due to the action of the guide element 61. Further, this will provide convenience for the subsequent cutting of the first composite material strip 92 by the slitter 5. After the slitter 5 cuts the first composite material strip 92 not bonded, the intermittent transfer strip 9 is formed.

During the bonding, if the guide element 61 is located on the circumferential surface of the roll, the bonding quality is affected, and the guide element 61 can be made of only a thinner material. In order to solve this problem, in a preferred embodiment of this application, the guide mechanism 60 includes a second control element for controlling the guide element 61 to be switched to a third position, a guide groove 65 is formed in the circumferential surface of the slitting roll 6, and the third position is located in the guide groove 65.

Before the slitting roll 6 is rotated to the bonding station, the guide element 61 is controlled to move to a third position by using a second control element, whereby driving the corresponding load strip 91 to enter the guide groove 65; and
after cutting, the guide element 61 is controlled to move to the first position by using the second control element, and then the guide element 61 is controlled to be switched to the second position by using the first control element.

Therefore, during the bonding, the second control element is located in the guide groove 65, and then the bonding pressure can be avoided, and only the load strip 91 located on the circumferential surface of the roll can be bonded to a first composite material; moreover, in a cutting process, the load strip 91 not bonded in the guide groove 65 can be separated from the first composite material by a sufficient distance, which is more conducive to the cutting of the first composite material. An intermittent structure can be formed only by cutting a location.

As for the specific form of the guide element 61, if the guide element 61 is located on the circumferential surface of the roll during the bonding, the guide element 61 in the form of a sheet is preferably adopted, the radian thereof can be consistent with the circumferential surface of the roll, and the guide element 61 in the form of a rod is preferably adopted when the position needs to be switched into the guide groove 65. This can better draw the load strip 91 into the guide groove 65 and prevent it from being damaged.

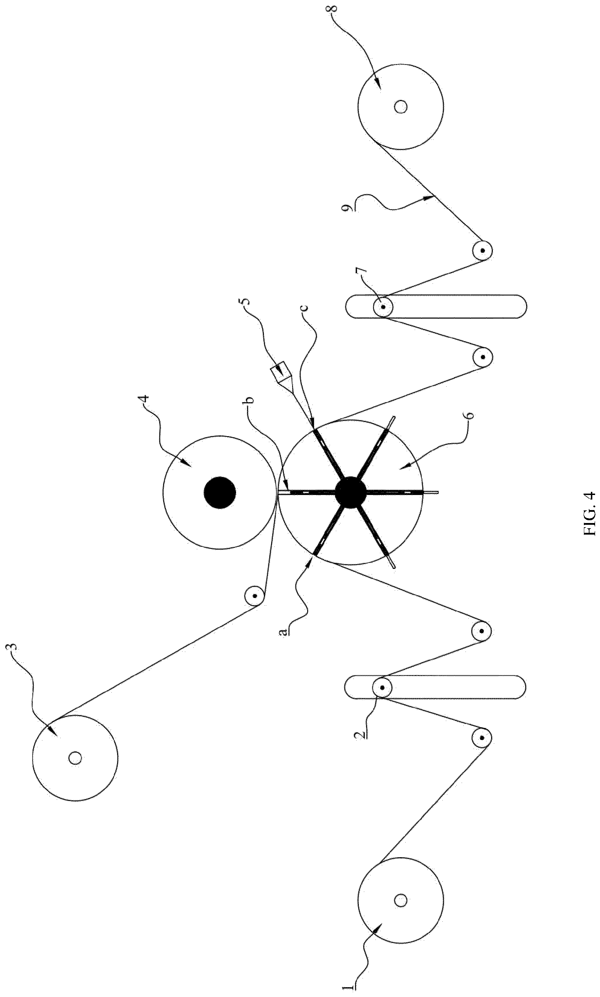

The first control element and the second control element can be specifically arranged in various forms, for example, the first control element and the second control element are arranged at the end face of the roll, and even the first control element and the second control element can be driven by a same driving unit. As shown in FIG. 2, in a preferred embodiment of this application, the guide mechanism 60 includes a guide bracket arranged in the guide groove 65, a side of the guide element 61 is hinged with the guide bracket 62, the first control element is a first linear driving element 63, both ends of the first linear driving element 63 are respectively hinged with the guide element 61 and the guide bracket 62 to drive the guide element 61 to rotate, whereby implementing switching between the first position and the second position. The guide element 61 can be rotated onto the circumferential surface of the roll, namely, at the first position, and can be rotated out of the circumferential surface of the roll, namely, at the second position. There is not only a single choice between the first position and the second position. In the first position, as long as the guide element 61 can be positioned on the load strip 91, the load strip 91 can be guided into the guide groove 65. In the first position, as long as the guide element 61 can get out of such a position, the load strip 91 can be wound around the circumferential surface of the slitting roll 6. For example, in the embodiment of FIG. 4, the first position of the guide element 61 is perpendicular to the end face of the roll, and the second position is parallel to the end face of the roll. Before point a, the load strip 91 is conveyed to the circumferential surface of the slitting roll 6. At the point a, the guide element 61 is switched to the first position and pressed against the load strip 91. Before point b, the guide element 61 is switched to the third position and the load strip 91 is pulled into the guide groove 65. Bonding is performed at the point b and slitting is performed at point c. After slitting, the guide element 61 is switched to the third position.

On this basis, in order to implement switching to the third position of the guide element 61, in the preferred embodiment of this application, the second control element is a second linear driving element 64, and both ends of the second linear driving element 64 are respectively connected to the guide bracket 62 and the guide groove 65 to drive the guide element 61, whereby implementing switching to the third position. The guide bracket 62, the first linear driving element 63 and the guide element 61 can be moved towards the direction of the center of the roll as a whole by contracting the second linear driving element 64, so that the guide element 61 can reach the third position, and the second linear driving element 64 can be extended to move away from the center of the roll as a whole. Both the first linear driving element 63 and the second linear driving element 64 can be an electric push rod, an air cylinder, a hydraulic cylinder and other equipment, among which the air cylinder is the most suitable.

Although the intermittent transfer strip 9 can be prepared by a single guide groove 65 and guide mechanism 60, the preparation efficiency is low. Therefore, in the preferred embodiment of this application, at least two guide grooves 65 are uniformly arranged on the circumferential surface of the slitting roll 6, and the guide mechanism 60 is respectively arranged in each guide groove 65. It can be seen that the length of each section of the first composite material strip 92 in the produced intermittent transfer strip 9 is the arc length between two adjacent guide grooves in the slitting roll 6 plus the width of the guide groove 65, and the intermittent length is about twice the depth of the load strip 91 pulled into the guide groove 65. The length of each section of the first composite material strip 92 can be adjusted by adjusting the arc length between the guide grooves 65, and the intermittent length can be adjusted by adjusting the depth at which the load strip 91 is pulled into the guide grooves 65. The width of the guide groove 65 should be as small as possible, and preferably should be controlled within 0.5-2 cm.

In order to help the slitting roll 6 cooperate with various stations, the slitting roll 6 is preferably driven to rotate by a stepping motor or a servo motor, and an angle of each rotation is equal to 360 degrees divided by the number of guide grooves, so that one section of the first composite material strip intermittently distributed is generated each rotation, and the angle of rotation can be accurately controlled by the stepping motor or the servo motor.

The slitter 5 can be existing slitting equipment such as a laser slitter 5 or a mechanical slitter 5 such as a blade and a cutter head, where the laser slitter 5 is optimal, and the slitting force of the laser slitter 5 is relatively small, which can ensure the stability of composite slitting.

The preparation device for a transfer strip 9 according to this application can also be additionally provided with an existing unwinding and winding structure, and cooperates with controllers such as PLC and single chip microcomputer for controlling an action, so as to realize continuous automatic production. As shown in FIG. 4, in a preferred embodiment of this application, the preparation device for a transfer strip 9 further includes a conveying line of a first composite material strip 92, a conveying line of a load strip 91 and a winder line of the transfer strip 9; an unwinder line of the first composite material strip 92 and an unwinder line of the load strip 91 are converged on a bonding station of a press roll 4 and a slitting roll 6, and a winder line of the transfer strip 9 is arranged behind the slitting roll 6;
the unwinder line of the first composite material strip 92 includes an unwinder 3 of the first composite material strip 92;
the conveying line of a load strip 91 includes an unwinding roll 1 of the load strip and a first floating roll 2 that are sequentially arranged; and
the winder line of the transfer strip 9 includes a second floating roll 7 and a winding roll 8 that are sequentially arranged.

The conveying line of a first composite material strip 92 is used for unwinding and conveying composite materials; the conveying line of a load strip 91 is used for unwinding and conveying the load strip 91; and the winder line of the transfer strip 9 is used for conveying and winding the transfer strip 9 produced. Because the load strip 91 needs to be pulled into the guide groove 65 before bonding, the first floating roll 2 is arranged and tension is applied thereon; however, the first floating roll needs to be leveled during the winding, so the second floating roll 7 is arranged on the winder line of the transfer strip 9 to provide the required tension.

## Claims

1. A preparation method for an intermittent composite strip, comprising the following steps:
acquiring a transfer strip (9), wherein the transfer strip (9) comprises a load strip (91) and a first composite material strip (92), and the first composite material strip (92) is intermittently arranged on the load strip (91);
acquiring a second composite material strip, wherein a bonding force between the second composite material strip and the first composite material strip (92) is greater than that between the first composite material strip (92) and the load strip (91) under a same pressure; and
performing pressure bonding on a side of the transfer strip (9) comprising the first composite material strip (92) with the second composite material strip to obtain the intermittent composite strip.

2. The preparation method for an intermittent composite strip according to claim 1, wherein the load strip (91) is a PE film, a PP film or a PET film.

3. An intermittent composite strip, wherein the intermittent composite strip is prepared by using the preparation method for an intermittent composite strip according to any one of claims 1 to 2.

4. A transfer strip for the preparation method for an intermittent composite strip according to any one of claims 1 to 2, comprising a load strip (91) and a first composite material strip (92), wherein the first composite material strip (92) is intermittently arranged on the load strip (91).

5. A preparation device for a transfer strip, comprising a press roll (4), a slitter (5) and a slitting roll (6), wherein a bonding station and a slitting station are sequentially arranged corresponding to the slitting roll (6), and the press roll (4) is arranged on the bonding station in combination with the slitting roll (6);
the slitting roll (6) comprises a roll body and a guide mechanism (60), wherein the guide mechanism (60) comprises a guide element (61) and a first control element; the guide element (61) has a first position and a second position and is switched between the first position and the second position through the first control element; the first position of the guide element (61) is located on the circumferential surface of the roll body; and the second position of the guide element (61) is separated from the circumferential surface of the roll body; and
the slitter (5) is arranged on the slitting station.

6. The preparation device for a transfer strip according to claim 5, wherein the guide mechanism (60) comprises a second control element for controlling the guide element (61) to be switched to a third position, a guide groove (65) is formed in the circumferential surface of the slitting roll (6), and the third position is located in the guide groove (65).

7. The preparation device for a transfer strip according to claim 6, wherein the guide element (61) is rod-shaped.

8. The preparation device for a transfer strip according to claim 6, wherein the guide mechanism (60) comprises a guide bracket (62) arranged in the guide groove (65), a side of the guide element (61) is hinged with the guide bracket (62), the first control element is a first linear driving element (63), both ends of the first linear driving element (63) are respectively hinged with the guide element (61) and the guide bracket (62) to drive the guide element (61) to rotate, whereby implementing switching between the first position and the second position.

9. The preparation device for a transfer strip according to claim 8, wherein the second control element is a second linear driving element (64), and both ends of the second linear driving element (64) are respectively connected to the guide bracket (62) and the guide groove (65) to drive the guide element (61), whereby implementing switching to the third position.

10. The preparation device for a transfer strip according to claim 6, wherein the circumferential surface of the slitting roll (6) is uniformly provided with at least two guide grooves (65), and the guide mechanism (60) is respectively arranged in each of the guide grooves (65).

11. The preparation device for a transfer strip according to claim 10, wherein the slitting roll (6) is driven to rotate through a stepping motor or a servo motor, and an angle of each rotation is equal to 360 degrees divided by the number of guide grooves.

12. The preparation device for a transfer strip according to claim 5, wherein the slitter (5) is a laser slitter (5) or a mechanical slitter (5).

13. The preparation device for a transfer strip according to any one of claims 5 to 12, further comprising a conveying line of a first composite material strip (92), a conveying line of a load strip (91) and a winder line of the transfer strip (9); an unwinder (3) line of the first composite material strip (92) and an unwinder line of the load strip (91) being converged on a bonding station of the press roll (4) and the slitting roll (6); a winder line of the transfer strip (9) being arranged behind the slitting roll (6),
the unwinder (3) line of the first composite material strip (92) comprises an unwinder (3) of the first composite material strip (92),
the conveying line of a load strip (91) comprises an unwinding roll (1) of the load strip (91) and a first floating roll (2) that are sequentially arranged, and
the winder line of the transfer strip (9) comprises a second floating roll (7) and a winding roll (8) that are sequentially arranged.

14. A preparation method for a transfer strip by the preparation device for a transfer strip according to any one of claims 5 to 13, comprising the following steps:
in a case that a guide element (61) is located at a second position, conveying a load strip (91) to the circumferential surface of a slitting roll (6);
controlling the guide element (61) to be switched into a first position by using a first control element, so that the guide element (61) is located on the load strip (91);
rotating the slitting roll (6) to a bonding station, and bonding a first composite material strip (92) to a load strip (91) through rolling of the press roll (4) and the slitting roll (6);
continuing to rotate the slitting roll (6) to a slitting station, and cutting the first composite material strip (92) on the load strip (91) into an intermittent structure by using the guide element (61) corresponding to a slitter (5) to obtain an intermittent transfer strip (9); and
after cutting, controlling the guide element (61) to be switched to the second position by using the first control element.

15. The preparation method for a transfer strip according to claim 14, wherein the guide mechanism (60) comprises a second control element for controlling the guide element (61) to be switched to a third position, a guide groove (65) is formed in the circumferential surface of the slitting roll (6), and the third position is located in the guide groove (65);
before the slitting roll (6) is rotated to the bonding station, the guide element (61) is controlled to move to a third position by using a second control element, whereby driving the corresponding load strip (91) to enter the guide groove (65); and
after cutting, the guide element (61) is controlled to move to the first position by using the second control element, and then the guide element (61) is controlled to be switched to the second position by using the first control element.
